# EUROPEAN PATENT APPLICATION

(11) **EP 4 173 814 A1**
(43) Date of publication of application: **03.05.2023**
(21) Application number: 22203972.9
(22) Date of filing: 26.10.2022
(51) Int. Cl.: B32B 1/08, B29D 23/00, B29C 70/32, B29C 53/60, B29C 53/58, B29C 33/30, F16C 13/02, F16C 19/36, H01H 3/02, B65H 19/22, B29C 53/66, B29L 23/00

(54) **DEVICE FOR FABRICATION OF COMPOSITE PIPES**

(30) Priority: 26.10.2021 PL 43932121
(71) Applicant: Siec Badawcza Lukasiewicz Przemyslowy Instytut Automatyki i Pomiarow PIAP, 02-486 Warszawa (PL)
(72) Inventor: ROZBORSKI, Krzysztof, 87-100 Torun (PL); JARZEMBSKI, Bogdan, 87-100 Torun (PL)

(57) **Abstract**

The device contains a main body in the form of a horizontal carrier pipe (1), which is mounted rotationally in the first (4) and the second (5) bracket fixed to the ground, and at least two mechanisms (14-15) that clamp the pipe mould (12) to the carrier pipe (1) and rotate the pipe mould (12). Each clamping and rotating mechanism (14, 15) contains a permanent grip (14) for clamping the first end of the pipe mould (12), a movable grip (15) for clamping the second end of the pipe mould (12), and a rotational mechanism of said mould (12). The rotation axes (13) of each clamping and rotating unit (14-15) are substantially parallel to the rotation axis (6) of the carrier pipe (1) and are distributed regularly around said axis (6). The permanent grips (14) are fixed to the carrier pipe (1) by means of the first movable body (10). The permanent grips (15) are fixed to the carrier pipe (1) by means of the first movable body (11). Each permanent grip (14) contains a through drive shaft (16), which is mounted rotationally (17-18) in the first movable body (10) and fitted with a rotational mechanism (19-20) of the pipe mould (12). Each movable grip (15) contains a supporting shaft (21), which is mounted rotationally (25) and slidingly (24) in the second movable body (11) and fitted with an actuator (23). The rotation axis of the supporting shaft (21) and the sliding motion axis of the supporting shaft (21) of one clamping and rotating unit (14-15) coincide with the rotation axis (13) of said clamping and rotating unit.

## Description

The present invention relates to a device for fabrication of composite pipes by wrapping a pipe mould with fibre and stabilising said fibre with a binding material.

Examples of composite pipe fabrication technologies are disclosed in publications EP1138465 and PL215662B1. These consist in wrapping a pipe mould with separation film and subsequently wrapping said mould with fibre, e.g. glass fibre, and saturating same with a binding material, e.g. resin. In devices which apply said technology, the pipe mould on which the composite pipe is fabricated is rotated, thanks to which it is easier to wrap said mould with fibre and to distribute resin on its whole circumference uniformly. Known devices for fabrication of composite pipes contain a mechanism which clamps the pipe mould and rotates same around the substantially horizontal rotation axis, which mechanism contains a permanent grip for clamping rotationally the first end of the pipe mould, a movable grip for clamping the second end of the pipe mould, and a rotational mechanism of said mould.

The object of the invention is a device which will simplify and accelerate the fabrication of composite pipes. This object is accomplished by a device according to the invention, which includes a mechanism that clamps a pipe mould and rotates same around the substantially horizontal rotation axis. Said mechanism contains a permanent grip for clamping rotationally the first end of the pipe mould, a movable grip for clamping the second end of the pipe mould, and a rotational mechanism of said mould. The invention is characterised in that it contains a main body with the horizontal rotation axis and at least two aforementioned clamping and rotating units, which clamp rotationally the pipe mould to the main body. The main body is in the form of a horizontal carrier pipe, which is mounted rotationally in the first and the second bracket fixed to the ground. The rotation axes of each clamping and rotating unit are substantially parallel to the rotation axis of the carrier pipe and are distributed regularly around said rotation axis. Permanent grips are fixed to the carrier pipe by means of the first movable body, and movable grips are fixed to the carrier pipe by means of the second movable body. Each permanent grip contains a through drive shaft, which is mounted rotationally in the first movable body. The first end of the drive shaft contains a seat that couples said shaft with the first end of the pipe mould. The rotational mechanism of the pipe mould is fixed at the second end of the drive shaft. Each movable grip contains a supporting shaft, which is mounted rotationally and slidingly in the second movable body. The first end of the supporting shaft contains a seat that couples the supporting shaft with the second end of the pipe mould. The second end of the supporting shaft contains an actuator catch, which is mounted rotationally on said end of the supporting shaft. The rotation axis of the drive shaft, the rotation axis of the supporting shaft and the sliding motion axis of the supporting shaft of one clamping and rotating unit coincide with the rotation axis of said clamping and rotating unit. An actuator is connected, preferably by articulation, with the catch of the supporting shaft's actuator.

In one of the variants of the invention, the drive shaft is mounted in the first movable body by means of a pair of tapered bearings characterised by various apertures of their tapered races, while an electric motor with a gear motor is the rotational mechanism of said shaft.

In another variant of the invention, the rotational mechanism of the drive shaft is fitted with an interlock of position of said shaft in a selected angular position.

In another variant of the invention, the supporting shaft is mounted slidingly in an intermediate sleeve, which, in turn, is mounted rotationally in the second movable body by means of a pair of barrel roller bearings. The intermediate sleeve has a lip which interacts with the axial recess in the outside surface of the supporting shaft.

In another variant of the invention, the catch of the actuator on the second end of the supporting shaft is mounted on two tapered bearings characterised by various apertures of their tapered races.

In another variant of the invention, the coupling seat of the drive shaft is in the form of a circular disk which is perpendicular to the axis of the drive shaft. Said disk has a radial recess for the clamping spigot of the first end of the pipe mould, with a widening for the shoulder of the free end of said spigot. The coupling seat of the supporting shaft is in the form of a circular disk, which is perpendicular to the axis of the supporting shaft and has a radial recess for the clamping spigot of the second end of the pipe mould and a widening for the shoulder of the free end of said spigot.

In another variant of the invention, the carrier pipe is a pipe with a circular cross-section. At both ends of said pipe spigots are mounted axially, fixed in the corresponding brackets by means of a pair of barrel roller bearings. The spigot at the first end of the carrier pipe is simultaneously the through drive shaft, to the free end whereof the rotational mechanism of the carrier pipe is fixed.

In another variant of the invention, the device contains four clamping and rotating units, the rotation axes whereof are parallel to the rotation axis of the carrier pipe and distributed every 90 angular degrees around the rotation axis of the carrier pipe and at an identical distance to said axis. The permanent grips are located at the side of the rotational mechanism of the carrier pipe.

In another variant of the invention, the rotation range of the carrier pipe is not more than 300 angular degrees, wherein the rotational mechanism of the carrier pipe is a bi-directional mechanism fitted with an interlock of the carrier pipe position in a selected angular position.

In another variant of the invention, each rotational mechanism of the pipe mould has an emergency switch, which is activated by the motion of a pull wire extended along the carrier pipe, in the space between the rotation axes of the neighbouring clamping and rotating units of the pipe mould.

In still another variant of the invention, the axis of the emergency switch pull wire is parallel to the rotation axis of the carrier pipe, while the distance between the axis of said pull wire to the rotation axis of the carrier pipe is from 70 to 90% of the distance between the rotation axis of the clamping and rotating unit and the rotation axis of the carrier pipe.

The invention considerably streamlines the fabrication of composite pipes, at the same time preserving the hitherto technology, by reducing the required space and accelerating the whole process. When using a device according to the invention, one operator can simultaneously and at a single place work on fabrication of several different composite pipes. The pipe mould clamping and rotating mechanism virtually eliminates radial runout, and therefore it is possible to apply higher rotational speeds than before, in particular while wrapping the pipe mould with separation film. Despite the application of higher rotational speeds of the pipe mould, the differentiation of the angles of races of the drive shaft's and the supporting shaft's bearings ensures a long service life of the device.

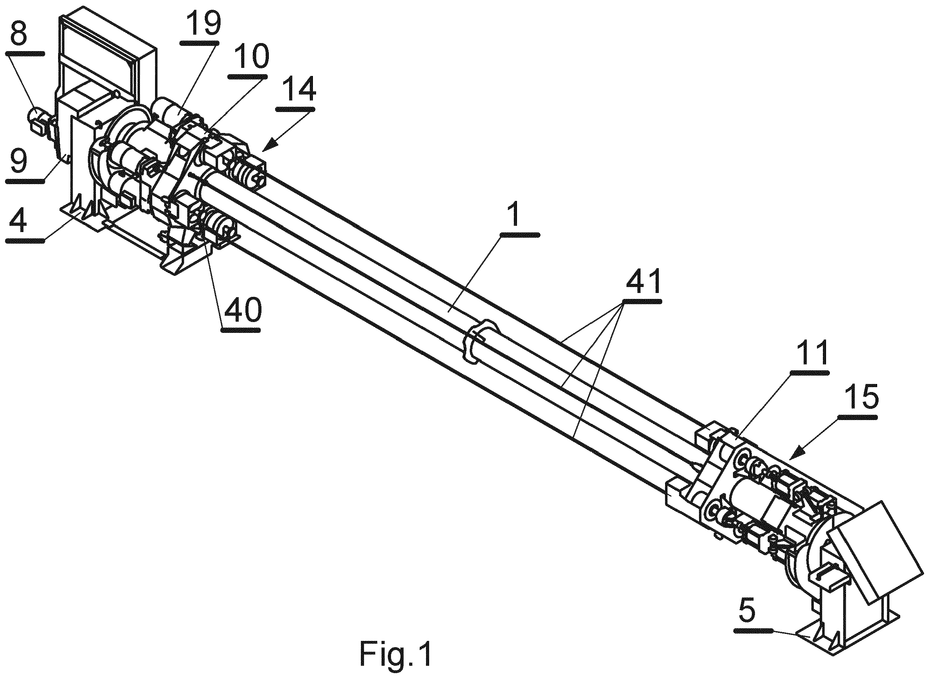

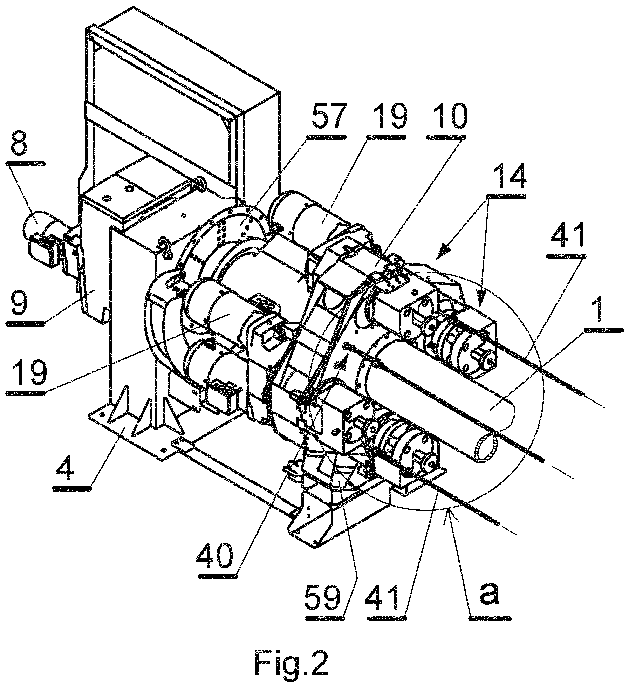

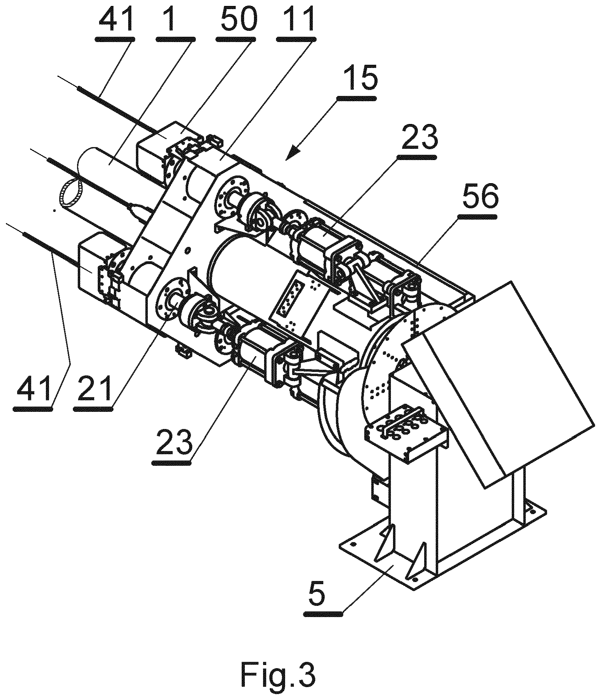

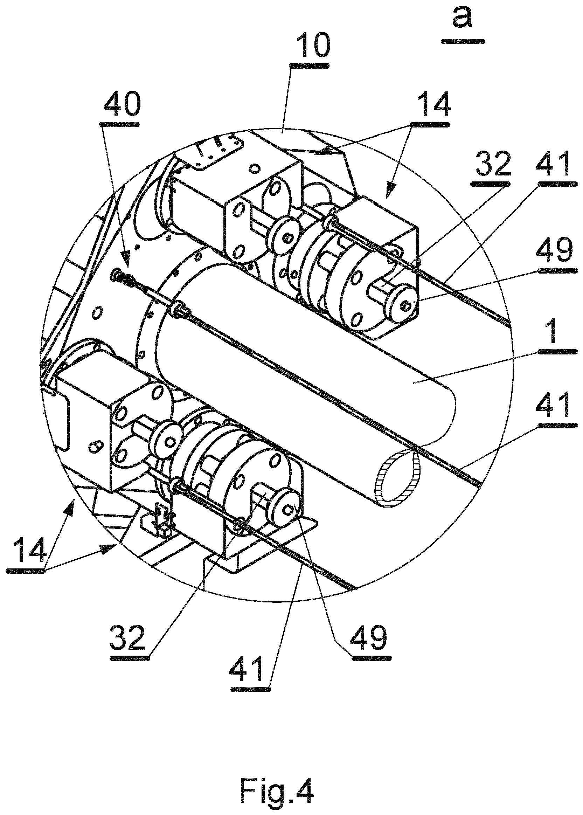

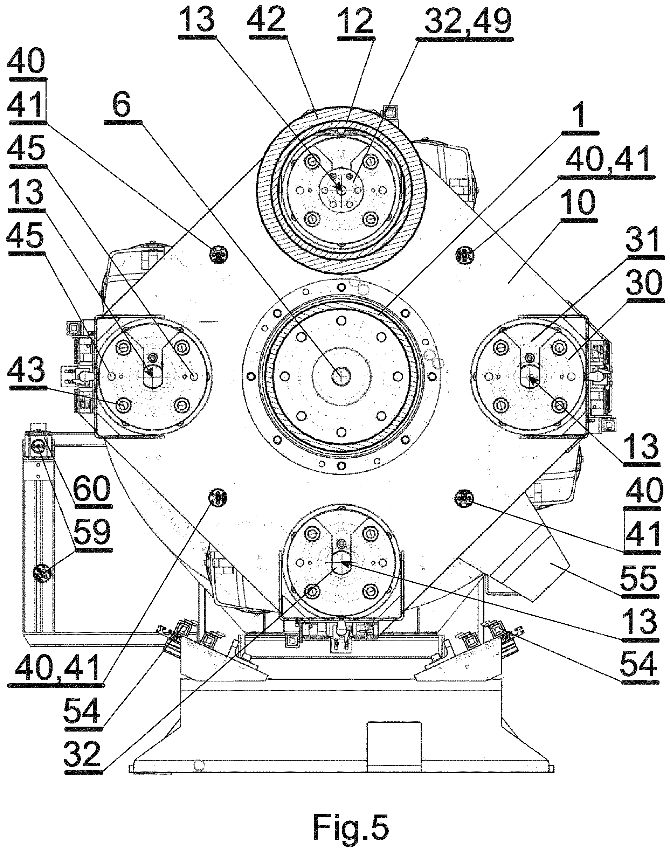

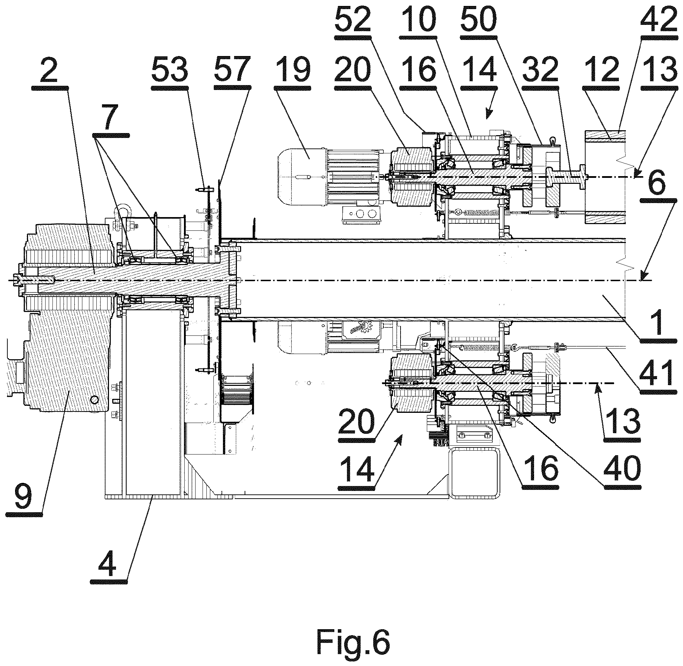

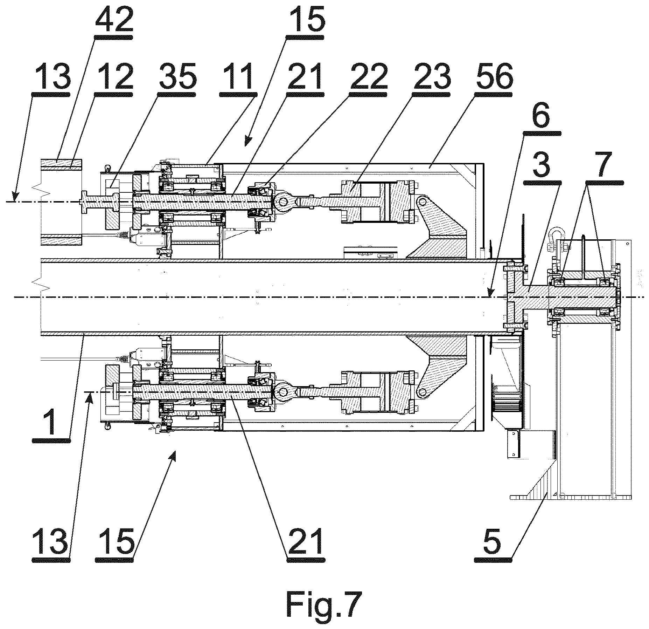

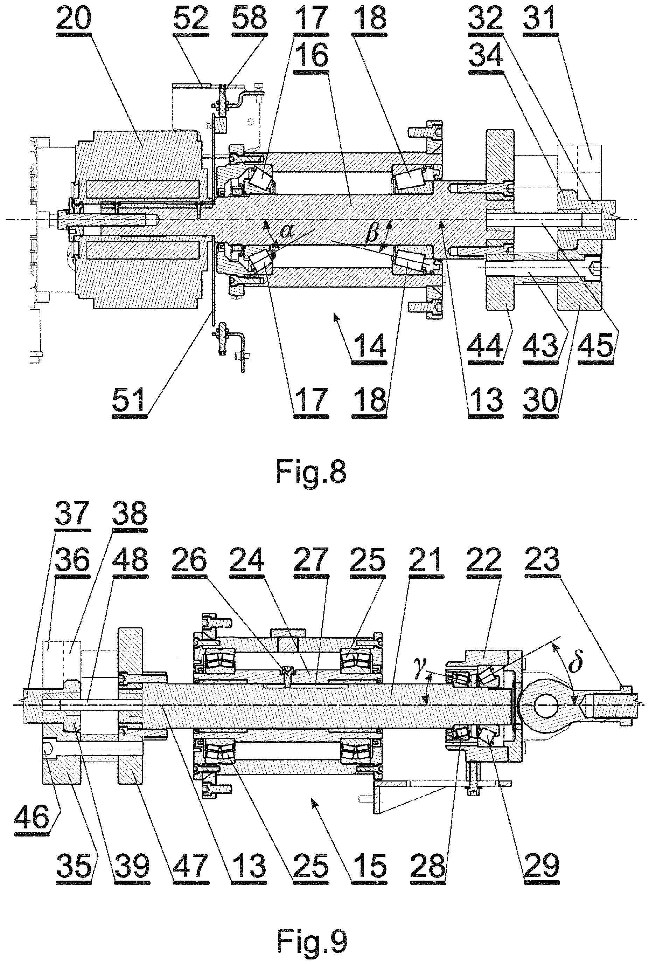

An embodiment of the object of the invention is reflected in a drawing, with Fig.1 presenting an axonometric view of the device according to the invention without pipe moulds, some guards and the fibre feed and binding material application mechanism mounted therein, and with Fig.2 and Fig.3 presenting enlarged fragments of said view. Fig.4 presents an enlarged fragment of the view from Fig.2. Fig.5 presents a view of the cross-section of the device from Fig.1 with one pipe mould mounted therein, looking in the direction of the rotational mechanism of the carrier pipe of said device. Fig.6 presents a fragment of the longitudinal section of the device from Fig.1 in the vicinity of the permanent grips of the pipe mould, i.e. corresponding to the view from Fig.2, with one pipe mould mounted. Fig.7 presents a fragment of the longitudinal section of the device from Fig.1 in the vicinity of the movable grips of the pipe mould, i.e. corresponding to the view from Fig.3, with one pipe mould mounted. Fig.8 presents an enlarged fragment of the cross-section from Fig.5 in the vicinity of the drive shaft of the permanent grip, while Fig.9 presents an enlarged fragment of the cross-section from Fig.8 in the vicinity of the supporting shaft of the movable grip.

The embodiment of a device according to the invention contains a main body in the form of a carrier pipe 1 with a circular cross-section and the inner diameter of circa 324 mm, assembled of two sections with the length of circa 4,700 mm each. The carrier pipe 1 has the first spigot 2 at its first end and has the second spigot 3 at its second end. The spigots 2 and 3 serve for mounting the pipe 1 rotationally in the first 4 and the second 5 brackets, respectively. The brackets 4 and 5 are fixed to the ground. The longitudinal axis of the pipe 1 and the axes of the spigots 2 and 3 are located on the horizontal rotation axis 6 of the carrier pipe 1. The spigots 2 and 3 are mounted in brackets 4 and 5, respectively, by means of two barrel roller bearings 7 each. The first spigot 2 is simultaneously the through drive shaft, to the free end whereof the rotational mechanism, in the form of an electric motor 8 with a gear motor 9, of the carrier pipe is fixed. The second spigot 3 is capable of compensating the changes in the length of the carrier pipe 1, which arise from changes in the ambient temperature. The rotation range of the carrier pipe 1 is circa 270 angular degrees, wherein the electric motor 8 is capable of running in both directions and is fitted with a brake that interlocks the rotation of the carrier pipe 1 in a selected angular position. In the vicinity of the first end of the pipe 1, the first movable body 10 is fixed thereto rigidly, while in the vicinity of the second end of the pipe 1 the second movable body 11 is fixed thereto rigidly. Four clamping and rotating units of the pipe moulds 12 are fixed in the aforementioned movable bodies 10 and 11. The rotation axes 13 of each of these units are parallel to the rotation axis 6 of the carrier pipe 1 and simultaneously constitute the axis of the pipe mould 12 and are distributed regularly around the axis 6 every 90 angular degrees and at the same distances from the axis 6. Each clamping and rotating unit contains a permanent grip 14 fixed to the first movable body 10 and a movable grip 15 fixed to the second movable body 11. Each permanent grip 14 contains a through drive shaft 16, which is mounted rotationally in the first movable body 10, by means of a pair of tapered bearings 17 and 18, characterised by different apertures of the tapered race. The first end of the drive shaft 16 contains a seat that couples said shaft with the first end of the pipe mould 12. The rotational mechanism of the pipe mould 12, in the form of an electric motor 19 with a gear motor 20, is fixed on the second end of the drive shaft 16. Each motor 19 has a brake, not reflected in the drawing, which makes it possible to interlock the shaft 16 in a selected angular position. Each movable grip 15 contains a supporting shaft 21, which is mounted rotationally and slidingly in the second movable body 11. The first end of the supporting shaft 21 contains a seat that couples said shaft with the second end of the pipe mould 12. The second end of the supporting shaft 21 contains an actuator 23 catch 22, which is mounted rotationally on said end of the supporting shaft 21. The rotation axis of the drive shaft 16, the rotation axis of the supporting shaft 21 and the sliding motion axis of the supporting shaft 21 of one clamping and rotating unit coincide with the rotation axis 13 of said unit. The supporting shaft 21 is mounted slidingly in an intermediate sleeve 24, which, in turn, is mounted rotationally in the second movable body 11 by means of a pair of barrel roller bearings 25. The intermediate sleeve 24 has a lip in the form of a through special bolt 26, the end whereof interacts with the axial recess 27 in the outside surface of the supporting shaft 21. Thanks to such a solution, the shaft 21 is able to move in the intermediate sleeve 24 only axially and its position in said sleeve is affected by the actuator 23. The catch 22 of the actuator 23 on the second end of the supporting shaft 21 is mounted on two tapered bearings 28 and 29 characterised by various apertures of their tapered races. The coupling seat of the drive shaft 16 is in the form of a circular disk 30, which is perpendicular to the axis 13 of the drive shaft 16. The disk 30 has a radial recess 31, which is "U"-shaped and is adjusted to the clamping spigot 32 of the first end of the pipe mould 12, with a widening 33 for the shoulder 34 of the free end of said spigot 32. The coupling seat of the supporting shaft 21 has a corresponding structure, i.e. it contains a circular disk 35, which is perpendicular to the axis 13 of the supporting shaft 21 and has a "U"-shaped radial recess 36 adjusted to the clamping spigot 37 of the second end of the pipe mould 12, with a widening 38 for the shoulder 39 of the free end of the spigot 37. In the described embodiment, the clamping spigots 32 and 37 and the recesses 31 and 36 are identical, which relieves the operator from the necessity to check whether the pipe mould 12 prepared for installation is rotated with the correct ends in the direction of the correct clamping and rotating units. For the purpose of making the structure easier to understand, Fig.1, Fig.2, Fig.3 and Fig.4 do not reflect the pipe moulds 12, preserving only their spigots 32, which are best visible in Fig.4. Each motor 19 of the rotational mechanism of the pipe mould 12 has an emergency switch 40, which is activated by the motion of a pull wire 41, extended along the carrier pipe 1 in the space between the rotation axes 13 of the neighbouring clamping and rotating units of the carrier pipe 1. The axis of the pull wire 40 of the emergency switch is parallel to the rotation axis 6 of the carrier pipe 1. The distance between the axis of the pull wire 41 and the rotation axis 6 of the carrier pipe 1 is from 70 to 90% of the distance between the rotation axis 13 of the clamping and rotating unit and the rotation axis 6 of the carrier pipe 1.

As described above, the pipe mould 12, on which a composite pipe 42 is fabricated by a known method, has a spigot 32 which is at its first end and is fixed in a permanent grip 14, and has a spigot 37 which is at its second end and is fixed in a movable grip 15. The disk 30 is fixed by means of bolts 43 to an intermediate disk 44, which, in turn, is bolted to the face of the shaft 16. The axiality of the connection of the disk 32 with the disk 44 is ensured by two locating pins 45. The connection of the disk 35 is designed similarly: it is fixed by means of bolts 46 to an intermediate disk 47, which is fixed to the face of the shaft 21, and positioned by means of pins 48. Along the section between the flange 49 fixing the mould 12 and the end shoulders, 34 and 39 respectively, cylindrical spigots 32 and 37 have two parallel flat areas located symmetrically in relation to the axis 13 at a distance adjusted to the width of the radial recesses, 31 and 36, respectively. The flat areas of the spigot 32 interlock its rotation in the disk 30, as a result of which the torque coming from the motor 19 is transferred to the pipe mould 12, causing its rotational motion necessary for executing the pipe 42 fabrication process. After fixing the pipe mould 12 in the grips 14 and 15, the carrier pipe 1 is rotated to such an angular position in which a selected pair of grips 14 and 15 is in the desired position, after which the rotation of the carrier pipe 1 is interlocked in this position. For the period of installation of the pipe mould 12, the recesses 31 and 36 in the disks 30 and 35 are directed upwards, after which the shaft 16 is interlocked, while the shaft 21 is slightly shifted in the sleeve 24 in the direction of the shaft 16. The pipe mould 12 is inserted from the top and as a consequence the spigot 32 moves into the recess 31, and its shoulder 34 moves into the widening 33, while the spigot 37 moves into the recess 36, and its shoulder 39 moves into the widening 38. Subsequently, the actuator 23 withdraws the shaft 21 and then the shoulders 34 and 38 press against the disks 30 and 35 and remain in the state of tension, owing to which the pipe mould 12 is strongly fixed in the grips 14 and 15, and said state continues as long as the pull exerted by the actuator 23 continues. The pipe mould 12 is removed from the device when the carrier pipe 1 and the disks 30 and 35 are in the same position as during the insertion of the mould 12 and the pull of the actuator 23 is released. The described solution makes it possible to fix and release the pipe mould 12 without the use of any tools. As mentioned above, the drive shaft 16 is mounted on two tapered bearings 17 and 18. The diameter of the shaft 16 at the place where bearings 17 and 18 are mounted is 65 mm, the angle *α* between the tapered race of the bearing 17 and the axis 13 is 34.28 angular degrees, while the angle *β* between the tapered race of the bearing 18 and the axis 13 is 15.47 angular degrees. The distance between the bearings 17 and 18 is circa 150 mm. The differentiation of the angles *α* and *β* of race of both bearings 17 and 18 ensures a high durability of the mounting of the shaft 16, which is subject both to radial loads, with their source being the pipe 42 fabrication process, and to axial loads generated by the actuator 23. A corresponding differentiation of angles of races of the tapered bearings is applied in the bearing system of the catch 22 of the actuator 23. The diameter of the mounting of the bearings 28 and 29 is 55 mm, the angle *γ* between the tapered race of the bearing 28 and the axis 13 is 17.52 angular degrees, while the angle S between the tapered race of the bearing 29 and the axis 13 is 34.28 angular degrees. The distance between the bearings 28 and 29 is circa 12 mm.

The rotating pipe mould 12 is first wrapped with separation film, after which said film is wrapped with fibre, which is saturated with a binding material, thereby fabricating the aforementioned composite pipe 42. The permanent grip 14 and the movable grip 15 at the place where spigots 32 and 37 are fixed are secured by guards 50. The guards 50 are opened at the stage of mould 12 insertion and removal, thereby giving the operator access to the spigots 32 and 37. The rotational speed of the mould 12 is adjusted finely and the position of its stop is controlled by position sensors 58, which interact with an indicator dial 51 fixed to the shaft 16 between the gear motor 20 and the movable body 10. The sensors 58 with the dial 51 are protected by a polycarbonate guard 52, which is bolted to the movable body 10. Power cables and signal cables, and where a pneumatic device is applied as an actuator 23 also compressed air lines, are extended to each clamping and rotating unit of the device according to the invention by means of two cable ducts located at both ends of the carrier pipe 1. The rotational motion of the carrier pipe 1 around the axis 6 is a swinging motion, controlled by means of inductive sensors 53 fixed to the bracket 4 and interacting with the indicator dial 57, which is fixed to the carrier pipe 1. For the purpose of preventing the loss of control over the rotational motion of the carrier pipe 1, a three-stage security system is applied. Apart from the ongoing control over the angle of rotation of the pipe 1 around the axis 6, the power supply of the motor 8 additionally passes through limit switches 54, which are triggered by the lip 55 of the movable body 10. The lip 55 also physically restricts the possible angle of rotation of the pipe 1 to the aforementioned range. For the purpose of enhancing operator's safety, apart from the pull-wire switches 40 the operator's workplace is protected by a stationary pull-wire switch 60 with two pull wires 59, and the working area of the movable grips 15 is protected by a guard 56 with inspection windows.

## Claims

1. A device for fabrication of composite pipes by wrapping a pipe mould with fibre and stabilising said fibre with a binding material, containing a mechanism which clamps the pipe mould and rotates same around the substantially horizontal rotation axis, which mechanism contains a permanent grip for clamping rotationally the first end of the pipe mould, a movable grip for clamping the second end of the pipe mould, and a rotational mechanism of said mould, **characterised in that** it contains a main body with the horizontal rotation axis (6) and at least two aforementioned clamping and rotating units (14-15), which clamp rotationally the pipe mould (12) to the main body, the main body is in the form of a horizontal carrier pipe (1), which is mounted rotationally in the first (4) and in the second (5) bracket fixed to the ground, the rotation axes (13) of each clamping and rotating unit (14-15) are substantially parallel to the rotation axis (6) of the carrier pipe (1) and are distributed regularly around said rotation axis (6), the permanent grips (14) are fixed to the carrier pipe (1) by means of the first movable body (10), and the movable grips (15) are fixed to the carrier pipe (1) by means of the second movable body (11), each permanent grip (14) contains a through drive shaft (16), which is mounted rotationally (17-18) in the first movable body (10), wherein the first end of the drive shaft (16) contains a seat that couples said shaft (16) with the first end of the pipe mould (12), while the rotational mechanism (19-20) of the pipe mould (12) is fixed at the second end of the drive shaft (16), each movable grip (15) contains a supporting shaft (21), which is mounted rotationally (25) and slidingly (24) in the second movable body (11), wherein the first end of the supporting shaft (21) contains a seat that couples said shaft with the second end of the pipe mould (12), while the second end of the supporting shaft (21) contains an actuator (23) catch (22), which is mounted rotationally (28-29) on said end of the supporting shaft (21), wherein the rotation axis of the drive shaft (16), the rotation axis of the supporting shaft (21) and the sliding motion axis of the supporting shaft (21) of one clamping and rotating unit (14-15) coincide with the rotation axis (13) of said unit, while an actuator (23) is connected, preferably by articulation, with the catch (22) of the supporting shaft's (21) actuator.

2. The device according to claim 1, **characterised in that** the drive shaft (16) is mounted in the first movable body (10) by means of a pair of tapered bearings (17, 18) **characterised by** various apertures (*α*, *β*) of their tapered races, while an electric motor (19) with a gear motor (20) is the rotational mechanism of said shaft (16).

3. The device according to claim 2, **characterised in that** the rotational mechanism (19-20) of the drive shaft (16) is fitted with an interlock of position of said shaft (16) in a selected angular position.

4. The device according to claim 1 or 2 or 3, **characterised in that** the supporting shaft (21) is mounted slidingly in an intermediate sleeve (24), which, in turn, is mounted rotationally in the second movable body (11) by means of a pair of barrel roller bearings (25), while the intermediate sleeve (24) has a lip (26) which interacts with the axial recess (27) in the outside surface of the supporting shaft (21).

5. The device according to claim 4, **characterised in that** the catch (22) of the actuator on the second end of the supporting shaft (21) is mounted on two tapered bearings (28, 29) **characterised by** various apertures (*α*, *β*) of their tapered races.

6. The device according to claim 2 or 3 or 4 or 5, **characterised in that** the coupling seat of the drive shaft (16) is in the form of a circular disk (30), which is perpendicular to the axis (13) of the drive shaft (16), has a radial recess (31) for the clamping spigot (32) of the first end of the pipe mould (12), with a widening (33) for the shoulder (34) of the free end of said spigot (32), while the coupling seat of the supporting shaft (21) is in the form of a circular disk (35), which is perpendicular to the axis (13) of the supporting shaft (21) and has a radial recess (36) for the clamping spigot (37) of the second end of the pipe mould (12) and a widening (38) for the shoulder (39) of the free end of said spigot (37).

7. The device according to claim 1 or 2 or 3 or 4 or 5 or 6, **characterised in that** the carrier pipe (1) is a pipe with a circular cross-section, at both ends of said pipe (1) spigots (2, 3) are mounted axially, fixed in the corresponding brackets (4, 5) by means of a pair of barrel roller bearings (7), wherein the spigot (2) at the first end of the carrier pipe (1) is simultaneously the through drive shaft, to the free end whereof the rotational mechanism (8-9) of the carrier pipe (1) is fixed.

8. The device according to claim 1 or 2 or 3 or 4 or 5 or 6 or 7, **characterised in that** it contains four clamping and rotating units (14-15), the rotation axes (13) whereof are parallel to the rotation axis (6) of the carrier pipe (1) and distributed every 90 angular degrees around the rotation axis (6) of the carrier pipe (1) and at an identical distance to said axis (6), wherein the permanent grips (14) are located at the side of the rotational mechanism (8-9) of the carrier pipe (1).

9. The device according to claim 8, **characterised in that** the rotation range of the carrier pipe (1) is not more than 300 angular degrees, wherein the rotational mechanism (8-9) of the carrier pipe (1) is a bi-directional mechanism fitted with an interlock of the carrier pipe (1) position in a selected angular position.

10. The device according to claim 8 or 9, **characterised in that** each rotational mechanism (19-20) of the pipe mould (12) has an emergency switch (40), which is activated by the motion of a pull wire (41) extended along the carrier pipe (1) in the space between the rotation axes (13) of the neighbouring clamping and rotating units (14-15) of the pipe mould (12).

11. The device according to claim 10, **characterised in that** the axis of the pull wire (41) of the emergency switch (40) is parallel to the rotation axis (6) of the carrier pipe (1), while the distance between the axis of the pull wire (41) and the rotation axis (6) of the carrier pipe (1) is from 70 to 90% of the distance between the rotation axis (13) of the clamping and rotating unit (14-15) and the rotation axis (6) of the carrier pipe (1).
